# EUROPEAN PATENT SPECIFICATION

(11) **EP 1 687 131 B1**
(45) Date of publication and mention of the grant of the patent: **25.04.2007**
(21) Application number: 04798590.8
(22) Date of filing: 18.11.2004
(51) Int. Cl.: B29C 70/44, B29C 70/54

(54) **BREATHER SHEET FOR COMPOSITE CURING AND METHOD OF ITS ASSEMBLY**
ENTLÜFTUNGSFOLIE FÜR VERBUNDWERKSTOFFAUSHÄRTUNG UND ANORDNUNGSVERFAHREN DAFÜR
TISSU RESPIRANT POUR LE DURCISSEMENT DES MATIERES COMPOSITES ET PROCEDE POUR SON ASSEMBLAGE

(30) Priority: 27.11.2003 GB 0327568; 27.11.2003 EP 03257470
(43) Date of publication of application: 09.08.2006
(73) Proprietor: BAE Systems PLC, London, Greater London SW1Y 5AD (GB)
(72) Inventor: DUFFY, Roger, Philip, Balderstone Lancashire BB2 7LF (GB)
(74) Representative: BAE SYSTEMS plc Group IP Department
(86) International application number: PCT/GB2004/004876
(87) International publication number: WO 2005/053939

(56) References cited:
- US-A- 4 548 859

## Description

This invention relates to the field of composite curing, particularly to a breather sheet for use in vacuum bagging.

Autoclave curing of composites is commonly used to manufacture aerospace laminate components. Vacuum bagging is employed to create pressure on a laminate during its cure cycle. Pressurising a composite laminate consolidates the laminate plies, removes air trapped between layers and optimises the fibre-to-resin ratio of the composite part. Before curing, processing materials are applied to the composite ply lay-up to control the resin content of the cured part and ensure proper application of autoclave pressure to the lay-up. A release film is placed against the uncured laminate and is used as a barrier between the laminate and the subsequent layers. A breather sheet is used to maintain a path throughout the bag to the vacuum source, enabling air and volatiles produced as the laminate cures to escape whilst continuous pressure is applied in the curing of the laminate. The breather layer also absorbs any excess resin bled from the laminate. Typically, synthetic fibre materials such as felt, and/or fibreglass fabric, are used as breather sheets. An impervious membrane surrounds the breather sheet, to contain any vacuum pressure applied to the lay-up before and during the cure and to transmit external autoclave pressure to the part. It also prevents any gaseous pressurising medium used in the autoclave from permeating the part and causing porosity which is undesirable because it would adversely affect the strength characteristics of the cured composite component. In addition, any such pressuring gas could affect the surface finish of the component. A mould tool surrounds the matrix of layers (or "ancillaries"), to apply pressure to the component during curing.

US-A-4 548 859 discloses a breather consisting of a coated fabric with a number of holes in accordance with the preambles of claims 1 and 7 respectively.

Compression of layers during autoclave curing causes several problems, particularly with the breather layer. The pores in the breather material tend to close, or the pores may become blocked by excess resin, causing 'lock-off' of the breather layer. This means that the breather layer is no longer pervious enough for air and volatiles to escape from the ply lay-up, leading to the production of a porous, low-quality part and/or one with a poor surface finish. Lock-off can also prevent a uniform pressure being applied to the laminate, leading to surface imperfections in and/or distortion of the composite component.

The breather sheet material may wrinkle during compression. This is highly disadvantageous because the wrinkles cause unacceptable creasing in the laminate and/or defects in the surface of the component. As the ancillaries are assembled, particularly on complex or severely shaped components and/or ones having a significant vertical dimension, there is a tendency for the breather layer material, and the other ancillaries, to sag, again causing creasing in the laminate and/or imperfections in the surface of the component.

The present invention aims to overcome or at least substantially reduce some of the above mentioned problems.

Accordingly, the present invention provides a breather sheet for use in the curing of a composite component comprising two distinct, affixed outer layers with a mesh layer interposed therebetween, each of the outer layers being provided with a plurality of holes prior to assembly of the breather sheet, the holes being configured and disposed such that when the two outer layers are fixed together to form the breather sheet a plurality of passageways is formed for air and/or volatiles to pass freely through the breather sheet, the passageways being configured and disposed such that the interposition of the mesh layer in any position or orientation relative to the outer layers does not substantially obstruct all of the passageways.

The plurality of holes in the outer layers and the interposing mesh ensure porosity of the breather sheet, thus avoiding 'lock-off' of the breather sheet, so that air and volatiles can escape and continuous pressure can be applied to the laminate. This allows a non-porous composite component, of high quality surface finish, to be produced; moreover, the breather sheet can easily be reused. In processes where hard tooling or rubber moulding is used, the breather sheet provides a bulk-free breather which does not lock off in use, and allowing segmented tooling to be used.

Preferably, the outer layers are made from semi-rigid material. A semi-rigid structure provides the breather sheet with a well-defined size and shape, and of very uniform thickness, and the sagging of layers to the bottom of the structure and formation of wrinkles on compression of the matrix layers during the curing process is prevented, improving the surface quality of the part. Further, any slight mis-shaping of the breather sheet can be accepted because, when the pack is placed inside the mould tool and placed under compression, the semi-rigid structure can flex to adopt the correct shape. If the layers of semi-rigid material and mesh are bonded together with an adhesive and the resulting breather sheet is required to be flexible, the adhesive used is preferably one which, when set is soft and flexible (a "conformal" adhesive) so that it is able to flex with the breather sheet, to prevent the sheet from buckling when flexed.

Advantageously, the mesh is incompressible across its plane. The incompressible mesh holds the outer layers of the breather sheet apart, maintaining the passageways through the breather sheet, and also ensures that the breather sheet is of uniform thickness.

Optionally, the layers of semi-rigid material and mesh may be bonded together with adhesive, and without substantially blocking the passageways provided by the holes. The adhesive holds the layers together in an integral unit, improving the ease of use of the breather sheet. The use of local spots of adhesive, rather than a wide spread, ensures that the passageways through the breather sheet, provided by the holes in the outer layers and the mesh, are not substantially blocked. If the breather sheet is not required to flex in use, the adhesive may be one which is rigid when set.

Optionally, at least a portion of the circumference of the breather sheet is adapted to abut another breather sheet in such a way that adjacent breather sheets can be used to form a composite breather pack. Placing the breather sheet around structures, particularly large structures, can be difficult, but having interlocking or adjacent sections of breather sheet eases the placement of a composite breather pack around the structure, each section being placed on the structure, and locked into place against adjacent sections.

Advantageously, the breather sheet is pre-formed to the required shape for the composite part. This further eases the process of placing the breather sheet around a structure.

According to another aspect of the invention, there is provided a method of assembling a breather sheet comprising two outer layers and a mesh layer such that the assembled breather sheet has a plurality of passageways therethrough for the free passage of fluid, the method comprising interposing a mesh layer between two outer layers, each of which is provided with a plurality of holes, aligning the two outer layers and the mesh layer, and fixing the layers together to form a unitary breather sheet.

The invention will now be described by way of example and with reference to the accompanying drawings, in which:
Figure 1 is a schematic view of a matrix of layers before curing of a laminate component and incorporating a breather sheet in accordance with the invention.
Figure 2 is an exploded view of the breather sheet of in Figure 1 prior to its assembly.
Figure 3 is a cross-section view of the breather sheet after assembly.

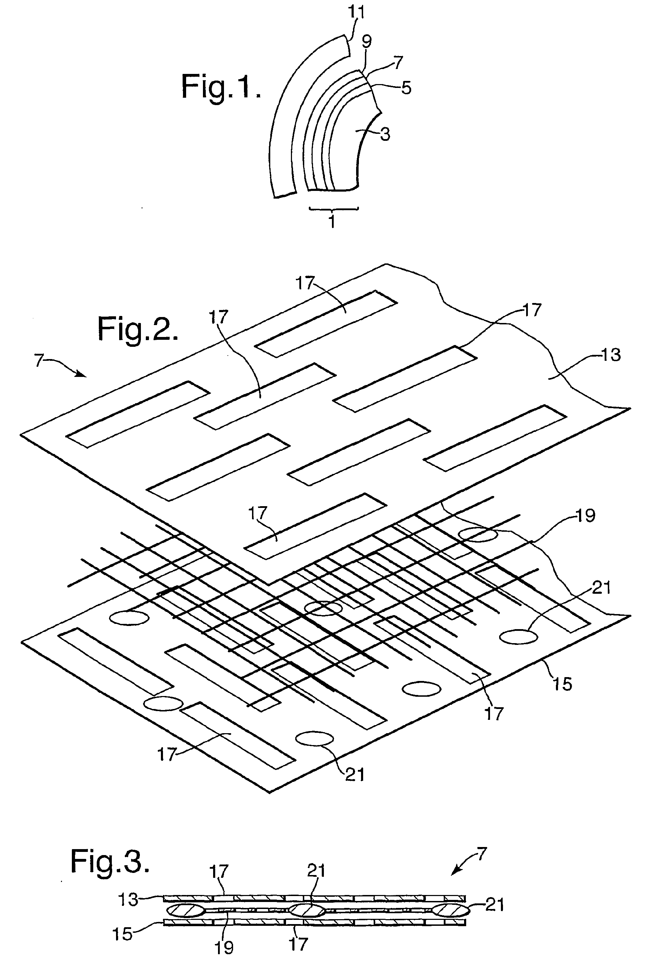

In Figure 1 a matrix of layers 1 in the manufacture of a composite laminate component 3. Individual prepregs are stacked to form a laminate 3, which is then covered with successive layers of porous fabric and a vacuum bag in the form of a nylon membrane 9. Thermosetting resins are polymerised by applying temperatures and pressures for a finite time. Pressure is applied to squeeze excess resin out of the composite component 3 and to consolidate individual layers. A release film 5 is placed against the uncured laminate 3 and is used as a barrier between the laminate 3 and subsequent layers to facilitate disassembly once the composite component has been cured. A breather sheet 7 is used to maintain a flow path, to enable air and volatiles to escape from the component 3, and uniform pressure to be applied to the laminate. The impervious nylon membrane 9 surrounds the breather sheet 7, to contain any vacuum pressure applied to the component 3 before and during the cure and to transmit external autoclave pressure to the component 3. It also prevents any gaseous pressurising medium used in the autoclave from permeating the component and causing porosity of the part. A mould tool 11 surrounds the matrix of layers.

The breather sheet, shown in Figure 2, comprises two outer layers 13, 15 of semi-rigid material, such as carbon fibre or glass fibre, each provided with a different arrangement of holes 17 over substantially its entire surface. The holes 17 are provided in the distinct outer layers 13, 15 prior to assembly of the breather sheet 7. A mesh layer 19, typically of PTFE-coated Kevlar or similarly incompressible material, is provided between the two layers 13, 15 of semi-rigid material. The breather sheet 7 is assembled by aligning the two outer layers 13, 15 such that the holes 17 therein are superposed to provide clear passageways through the assembly, and then interposing the mesh layer 19 between the two outer layers 13, 15 so that the passageways are not obstructed. Advantageously, the holes 17 are sized and disposed in each outer layer such that the interposition of the mesh layer 19 cannot substantially obstruct the passageways however the mesh layer 19 is positioned or orientated relative to the outer layers 13, 15. The three layers are then bonded together with local spots 21 of adhesive. As illustrated in the cross-sectional view of Figure 3, the adhesive bonds the two layers 13, 15 together, holding the mesh firmly sandwiched between them. The local spots 21 of adhesive do not substantially block the passageways provided through the breather sheet, the holes in the semi-rigid material layers being of a size and configuration such that a plurality of passageways are provided to enable air and volatiles, to flow through the breather sheet without restriction. The different arrangement of holes in each layer of semi-rigid material assists this.

The semi-rigid structure of the breather sheet helps ease the assembly of the matrix layers. Sagging of the layers downwardly under gravity is prevented, and the thickness of the breather sheet is made more uniform. Any variation/reduction in the thickness of the breather sheet may reduce the quality of the component due to the inability of the breather sheet to absorb the necessary amount of resin and it may adversely affect the dimensional accuracy of the component. If there is excess resin in the laminate, the properties of laminate will be discussed by those of the resin. If there is too little resin weak spots will be created in the component. The key to obtaining the strength-to-weight advantage of composites is the optimisation of the fibre-to-resin ratio. It is therefore important to ensure that the thickness of the breather sheet is uniform around the component and this is facilitated by the assembled breather sheet being incompressible and of substantially uniform thickness. This is achieved by virtue of the mesh layer being effectively incompressible in a direction perpendicular to its plane. The semi-rigid structure also prevents the formation of wrinkles on compression of the matrix layers, leading to improved surface quality in the finished component.

Having described embodiments of the invention, numerous modifications will now become apparent to the skilled person.

While it is advantageous, it is not necessary for each layer of semi-rigid material to be provided with an arrangement of holes different to that provided on adjacent layers of semi-rigid material. Additionally, it will be appreciated that the size of the holes is not critical, but the interconnection of these across the breather sheet is; the interconnections must always be sufficient to maintain the flow paths for air and/or volatiles through the breather sheet.

The semi-rigidity of the breather sheet enables it to be pre-formed to the shape required for the component. With the prior art breather layers, it is difficult to ensure that there is enough breather material in tight radii of the component so that bridging does not occur. Pre-forming of a semi-rigid breather sheet as described herein avoids this problem.

## Claims

1. A breather sheet (7) for use in the curing of a composite part **characterised in** comprising two distinct, affixed outer layers (13, 15) with a mesh layer (19) interposed therebetween, each of the outer layers being provided with a plurality of holes (17) prior to assembly of the breather sheet, the holes being configured and disposed such that when the two outer layers are fixed together to form the breather sheet a plurality of passageways is formed for air and/or volatiles to pass freely through the breather sheet, the passageways being configured and disposed such that that the interposition of the mesh layer in any position or orientation relative to the outer layers does not substantially obstruct all of the passageways.

2. A breather sheet (7) as claimed in Claim 1 wherein the outer layers (13, 15) are made of a semi-rigid material.

3. A breather sheet as claimed in Claim 1 or 2 wherein the mesh layer (19) is incompressible in one plane.

4. A breather sheet (7) as claimed in Claim 1, 2 or 3 wherein the outer layers (13, 15) and mesh layer (19) are bonded together with adhesive.

5. A breather sheet (7) as claimed in any of the preceding claims wherein at least a portion of the circumference of the breather sheet (7) is adapted to abut another breather sheet in such a way that adjacent breather sheets can be used to form a composite breather pack.

6. A breather sheet (7) as claimed in any of the preceding claims pre-formed to the required shape for the composite component.

7. A method of assembly of a breather sheet (7) comprising two outer layers (13, 15) and a mesh layer (19) such that the assembled breather sheet has a plurality of passageways therethrough for the free passage of air and/or volatiles, **characterised in** the method comprising interposing a mesh layer (19) between two outer layers (13, 15), each of which is provided with a plurality of holes (17) prior to assembly, aligning the two outer layers and the mesh layer, and fixing the layers together to form a unitary breather sheet.

8. A method according to Claim 7 comprising bonding the two outer layers (13, 15) together with the mesh (19) sandwiched there between.

9. A method according to Claim 7 or 8 comprising shaping the two outer layers (13, 15) to form a breather sheet of a predetermined shape.

10. Use of a breather sheet (7) as claimed in any of Claims 1 to 6 in the curing of a composite part.

## Patentansprüche

1. Eine Entlüfterplatte (7) zur Verwendung bei der Aushärtung eines Verbundteils, **dadurch gekennzeichnet, dass** sie zwei ausgeprägte, fixierte äußere Schichten (13, 15) mit einer eingefügten Netzschicht (19) beinhaltet, wobei jede der äußeren Schichten vor dem Zusammenbau der Entlüfterplatte mit einer Vielzahl von Löchern (17) versehen wird, wobei die Löcher so konfiguriert und angeordnet werden, dass, wenn die zwei äußeren Schichten aneinander befestigt werden, um die Entlüfterplatte zu bilden, eine Vielzahl von Durchgängen gebildet werden, damit Luft und/oder flüchtige Bestandteile unbehindert durch die Entlüfterplatte gehen können, wobei die Durchgänge so konfiguriert und angeordnet werden, dass das Einfügen der Netzschicht in jedweder Position oder Orientierung relativ zu den äußeren Schichten nicht wesentlich alle Durchgänge blockiert.

2. Entlüfterplatte (7) gemäß Anspruch 1, wobei die äußeren Schichten (13, 15) aus einem halbstarren Material gefertigt sind.

3. Entlüfterplatte gemäß Anspruch 1 oder 2, wobei die Netzschicht (19) in einer Ebene inkompressibel ist.

4. Entlüfterplatte (7) gemäß Anspruch 1, 2 oder 3, wobei die äußeren Schichten (13, 15) und die Netzschicht (19) durch Haftmittel aneinander gebunden sind.

5. Entlüfterplatte (7) gemäß einem der vorhergehenden Ansprüche, wobei mindestens ein Abschnitt des Umfangs der Entlüfterplatte (7) angepasst ist, um auf eine solche Art und Weise gegen eine andere Entlüfterplatte zu stoßen, dass angrenzende Entlüfterplatten verwendet werden können, um ein Verbundentlüfterbündel zu bilden.

6. Entlüfterplatte (7) gemäß einem der vorhergehenden Ansprüche, die zu der erforderlichen Form für die Verbundkomponente vorgebildet ist.

7. Ein Verfahren zum Zusammenbau einer Entlüfterplatte (7), die zwei äußere Schichten (13, 15) und eine Netzschicht (19) beinhaltet, so dass die zusammengebaute Entlüfterplatte eine Vielzahl von Durchgängen dort hindurch für den unbehinderten Durchtritt von Luft und/oder flüchtigen Bestandteilen aufweist, **dadurch gekennzeichnet, dass** das Verfahren das Einfügen einer Netzschicht (19) zwischen zwei äußere Schichten (13, 15), von denen jede vor dem Zusammenbau mit einer Vielzahl von Löchern (17) versehen wird, das Ausrichten der zwei äußeren Schichten und der Netzschicht und das Befestigen der Schichten aneinander, um eine einheitliche Entlüfterplatte zu bilden, beinhaltet.

8. Verfahren gemäß Anspruch 7, das das Aneinander-Binden der zwei äußeren Schichten (13, 15) mit dazwischen eingeklemmtem Netz (19) beinhaltet.

9. Verfahren gemäß Anspruch 7 oder 8, das das Formen der zwei äußeren Schichten (13, 15) zum Bilden einer Entlüfterplatte von zuvor festgelegter Form beinhaltet.

10. Eine Verwendung einer Entlüfterplatte (7) gemäß einem der Ansprüche 1 bis 6 bei der Aushärtung eines Verbundteils.

## Revendications

1. Un feuillet à évents (7) destiné à être utilisé lors du durcissement d'une pièce composite **caractérisé en ce qu'**il comprend deux couches externes appliquées distinctes (13, 15) entre lesquelles est interposée une couche en treillis (19), chacune des couches externes étant munie d'une pluralité de trous (17) préalablement à l'assemblage du feuillet à évents, les trous étant configurés et disposés de telle sorte que lorsque les deux couches externes sont fixées ensemble pour former le feuillet à évents, une pluralité de voies de passage est formée pour que de l'air et/ou des éléments volatils passent librement au travers du feuillet à évents, les voies de passage étant configurées et disposées de telle sorte que le fait d'interposer la couche en treillis dans n'importe quelle position ou orientation relativement aux couches externes ne fasse pas obstruction de façon substantielle à la totalité des voies de passage.

2. Un feuillet à évents (7) tel que revendiqué dans la revendication 1 dans lequel les couches externes (13, 15) sont faites en un matériau semi-rigide.

3. Un feuillet à évents tel que revendiqué dans la revendication 1 ou 2 dans lequel la couche en treillis (19) est incompressible dans un plan.

4. Un feuillet à évents (7) tel que revendiqué dans la revendication 1, 2 ou 3 dans lequel les couches externes (13, 15) et la couche en treillis (19) sont collées ensemble avec de l'adhésif.

5. Un feuillet à évents (7) tel que revendiqué dans n'importe lesquelles des revendications précédentes dans lequel au moins une portion de la circonférence du feuillet à évents (7) est adaptée pour abouter un autre feuillet à évents de telle façon que des feuillets à évents adjacents puissent être utilisés pour former un groupe à évents composite.

6. Un feuillet à évents (7) tel que revendiqué dans n'importe lesquelles des revendications précédentes formé au préalable selon la conformation requise pour le composant composite.

7. Un procédé d'assemblage d'un feuillet à évents (7) comprenant deux couches externes (13, 15) et une couche en treillis (19) de telle sorte que le feuillet à évents assemblé ait une pluralité de voies de passage au travers de celui-ci pour le libre passage de l'air et d'éléments volatils, **caractérisé en ce que** le procédé comprend interposer une couche en treillis (19) entre deux couches externes (13, 15), lesquelles sont chacune munies d'une pluralité de trous (17) préalablement à l'assemblage, aligner les deux couches externes et la couche en treillis, et fixer les couches ensemble afin de former un feuillet à évents unitaire.

8. Un procédé selon la revendication 7 comprenant coller les deux couches externes (13, 15) ensemble avec le treillis (19) pris en sandwich entre celles-ci.

9. Un procédé selon la revendication 7 ou 8 comprenant donner une forme aux deux couches externes (13, 15) pour former un feuillet à évents d'une conformation prédéterminée.

10. Utilisation d'un feuillet à évents (7) tel que revendiqué dans n'importe lesquelles des revendications 1 à 6 lors du durcissement d'une pièce composite.
